# EUROPEAN PATENT APPLICATION

(11) **EP 1 783 579 A2**
(43) Date of publication of application: **09.05.2007**
(21) Application number: 06123507.3
(22) Date of filing: 06.11.2006
(51) Int. Cl.: G05G 1/14, B60K 26/02

(54) **Accelerator pedal with Hall-effect movement sensor**

(30) Priority: 08.11.2005 IT MI20052121
(71) Applicant: Ellen S.R.L., 20024 Garbagnate Milanese MI (IT)
(72) Inventor: Iezzi, Antonio, 21010, GOLASECCA (VA) (IT)
(74) Representative: Mittler, Enrico

(57) **Abstract**

A pedal is described for the control of vehicles, including a movable lever (1) rotatably coupled to a fixed base (4), and a device (5) for detecting the movement of said movable lever (1) with respect to said fixed base (4). Said device (5) comprises a magnet (6) capable of interacting with a Hall-effect sensor (8), and a circuit board for the processing and transmission of the information detected by said Hall-effect sensor (8).

## Description

The present invention concerns an accelerator pedal with Hall-effect movement sensor.

For accelerators on vehicles (especially tractors and off-road vehicles), a type of pedal is increasingly gaining a foothold in which the position of the pedal itself, and therefore the acceleration required is detected by a sensor which outputs an electrical signal linearly varying in accordance with the position of the pedal.

There are currently accelerator pedals on sale consisting of a movable lever, rotatably coupled by means of a pin to a cylindrical housing which is integral with a fixed base.

The use is known of a sensor on the said pin which detects the angle of rotation of the pin itself with respect to the fixed cylindrical housing. This solution is fairly complicated and is a source of undesirable bulkiness.

Also, the use of potentiometers or rotary sensors entails friction and rolling which are a cause of premature wear of the mechanical components and therefore of unreliability.

Moreover, the measurement is not very accurate, especially with the passage of time, precisely because of the above-mentioned premature wear of the mechanical components.

The object of the present invention is to produce a pedal for vehicles including a device for detecting movement which is of simple and reliable construction.

In accordance with the invention, this object is achieved with a pedal for the control of vehicles, including a movable lever rotatably coupled to a fixed base, and a device for detecting the movement of said movable lever with respect to said fixed base, characterised in that said device comprises a magnet capable of interacting with a Hall-effect sensor, and a circuit board for the processing and transmission of the information detected by said Hall-effect sensor.

The magnet and the Hall-effect sensor are static elements spaced apart from each other, and for this reason there is no friction or rolling between mechanical components

These and other characteristics of the present invention will be made more clearly evident from the following detailed description of an example of practical embodiment which is illustrated without limiting effect in the attached drawings, wherein:
figure 1 shows a perspective view of the pedal according to the present invention;
figure 2 shows a perspective view similar to that in figure 1 with a detail enlarged;
figure 3 shows a lateral view of the pedal in working position, with the rest position shown by dotted lines;
figure 4 shows a schematic representation of the principal portion of the circuit board.

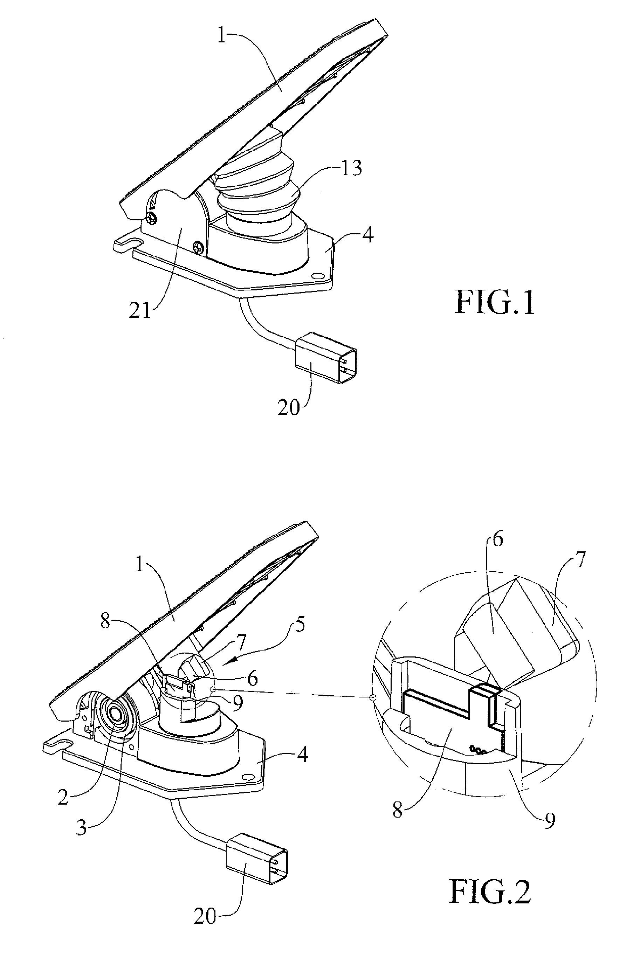

The pedal shown in figures 1-3, in particular an accelerator pedal, includes a movable lever 1 rotatably coupled by means of a horizontal pin 2 to a cylindrical housing 3 on a fixed base 4, an electrical connector plug 20 and a device 5 for detecting movement, covered by a sleeve 13.

The coupling between the pin 2 and the cylindrical housing 3 (visible in figure 2) is covered by a cover 21.

Said device 5 includes a movable magnet 6 (made up of ferrite, for example), made integral with lever 1 by a support element 7, and capable of interacting with a Hall-effect sensor 8 fixed to base 4 by means of a support body 9.

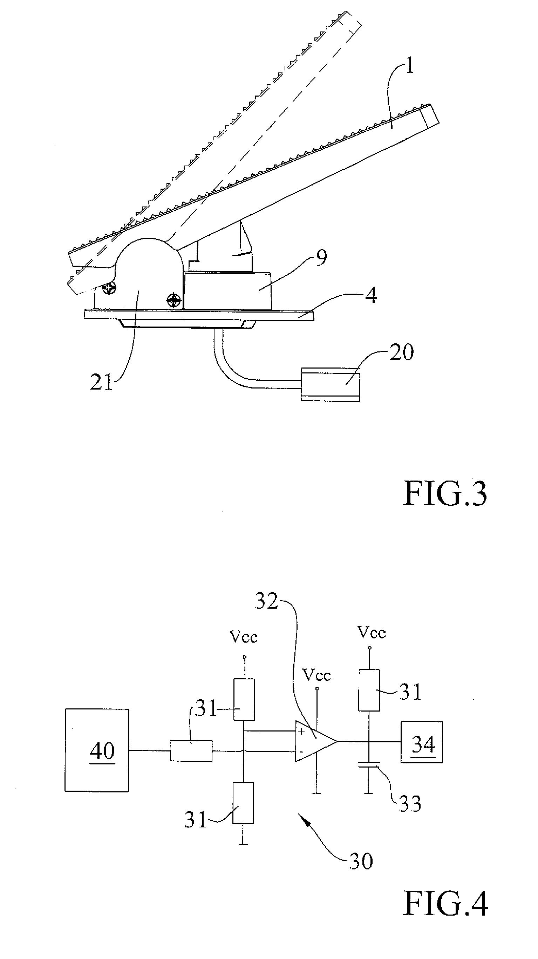

Figure 4 shows a schematic representation of said circuit board including a main block 40 representing the portion of the circuit usable for the reception and processing of the signal coming from sensor 8, and an amplification circuit 30 including resistances 31, an amplifier 32, a condenser 33, feeds of various voltages and earths. The output signal, proportional to the angle "swept" by lever 1, is represented by a block 34.

More generally, said circuit board includes means to allow it to be adequately tolerant of automotive electrical conditions such as positive and negative peaks which are particularly destructive and not suitably filtered or eliminated. It is also completely encased in resin to prevent electromagnetic interferences and emissions, in accordance with EU regulations.

The operation of device 5 is very simple.

Considering the pedal at rest as in figures 1-2 (and the dotted part of figure 3), pressing lever 1 causes the latter to rotate, and thus also causes the rotation of magnet 6. Sensor 8 thus begins to interact with the magnetic field induced by the ferrite magnet 6.

Depending on the angle of rotation of lever 1, the pedal, specifically a microprocessor integrated into the board, will provide an analogue output at a proportional voltage, which the amplification circuit 30 proceeds to amplify.

The lever can be preset to rotate through a maximum angle (for example 22°), which will correspond to the maximum output voltage. Block 40 is therefore equipped with a microprocessor with a programmable memory.

Each pedal is calibrated and tested individually through a computerised process which allows the analogue output to be set in accordance with the angle "swept" by lever 1.

The mechanical part (lever 1, base 4, pin 2 etc) is made with pressing equipment which guarantees a working life of ten million operations, thanks also to further hardening and anti-corrosion treatment.

## Claims

1. Pedal for the control of vehicles, including a movable lever (1) rotatably coupled to a fixed base (4), and a device (5) for detecting the movement of said movable lever (1) with respect to said fixed base (4), **characterised in that** said device (5) comprises a magnet (6) capable of interacting with a Hall-effect sensor (8), and a circuit board for the processing and transmission of the information detected by said Hall-effect sensor (8).

2. Pedal according to claim 1, **characterised in that** it is an accelerator pedal.

3. Pedal according to claim 1, **characterised in that** said magnet (6) is integral with the movable lever (1) and that the Hall-effect sensor (8) is integral with the fixed base (4).

4. Pedal according to claim 1, **characterised in that** said magnet (6) is made up of ferrite.

5. Pedal according to claim 1, **characterised in that** it includes means (7, 9) for supporting magnet (6) and Hall-effect sensor (8).

6. Pedal according to claim 1, **characterised in that** it includes an electrical supply plug (20).

7. Pedal according to claim 1, **characterised in that** said movable lever (1) includes at least one pin (2) rotatably coupled to at least one cylindrical housing (3) integral with the fixed base (4).

8. Pedal according to claim 1, **characterised in that** said circuit board includes a main block (40) for the input, processing and output of the value detected by the Hall-effect sensor (8).
